# EUROPEAN PATENT APPLICATION

(11) **EP 3 173 899 A1**
(43) Date of publication of application: **31.05.2017**
(21) Application number: 16199281.3
(22) Date of filing: 17.11.2016
(51) Int. Cl.: G06F 1/16, H04N 1/00, H04N 1/44

(54) **DISPLAY DEVICE AND METHOD OF NOTIFYING THE POSITION OF AN AUTHENTIFICATION DEVICE IN A DISPLAY AREA**

(30) Priority: 27.11.2015 JP 2015232226
(71) Applicant: Kabushiki Kaisha Toshiba, Tokyo 105-8001 (JP); Toshiba TEC Kabushiki Kaisha, Tokyo 141-0032 (JP)
(72) Inventor: Takahashi, Kazunobu, Shinagawa-ku, Tokyo 141-8562 (JP)
(74) Representative: Takeuchi, Maya

(57) **Abstract**

According to an embodiment, a display device includes a display unit, a storage unit, and a control unit. The display unit includes one or more detection units. The storage unit is configured to store map information indicating whether the detection unit corresponds to any area in a display area of the display unit. The controller is configured to determine one or more available detection units among the detection units, and control the display unit to activate an area of the display area corresponding to the available detection unit based on the map information.

## Description

### FIELD

Exemplary embodiments described herein relate generally to a display device.

### BACKGROUND

Liquid crystal panel display devices are commonly used as user input devices in many situations. One such situation is when the user needs to perform an authentication action. With conventional display devices used for user authentication, it is difficult for the user to recognize when and in which area the authentication is possible on the liquid crystal panel.

### DESCRIPTION OF THE DRAWINGS

FIG. 1 is a block diagram which is one example of an MFP according to an embodiment.
FIG. 2 is a diagram to illustrate map information according to the embodiment.
FIG. 3 is a flow chart illustrating an authentication sequence according to the embodiment.
FIG. 4 is the flow chart illustrating a display sequence of an authentication screen according to the embodiment.
FIG. 5 is the diagram of the authentication screen according to the embodiment.
FIG. 6 is the diagram of the authenticating screen according to the embodiment.

### DETAILED DESCRIPTION

Generally, a system on glass technology for low-temperature polysilicon thin film transistor (TFT) is developed. A device having a built-in authentication device such as a card authentication or a fingerprint authentication in a liquid crystal panel is described. Embodiments described herein provide a display device that notifies a user regarding a position within a display area of the device that is capable of detection and a detection timing when the device can accept input.

According to an embodiment, a display device includes a display unit, a storage unit, and a controller. The display unit includes one or a plurality of detection units. The storage unit stores map information indicating whether any of the one or more detection units corresponds to any area in a display area of the display unit. The controller is configured to determine one or more available detection units from the one or more detection units, and to control the display unit to activate an area of the display area corresponding to the available detection unit based on the map information.

Preferably, the controller is configured to control the display unit to display a mark on the area of the display area corresponding to the available detection unit.

Preferably, the controller is configured to control the display unit to display information indicating authentication is in progress in a different area from the area of the display area corresponding to the available detection unit.

The device may further comprise an input unit configured to receive selection of a detection unit to be used among the available detection units.

Preferably, the one or more detection units comprises a first detection unit and a second detection unit at different positions in the display unit.

Preferably, wherein the controller is configured to identify either of the first detection unit or the second detection unit as an available detection unit by displaying an area of information in the display area.

Preferably, when the first detection unit is selected by the user, the controller activates the first detection unit and deactivates the second detection unit.

Preferably, the first detection unit and the second detection unit are in an available state until the user selects the first detection unit or second detection unit.

Preferably, the map information includes position information of the one or more detection units and positon information of an input non-recognition area.

Preferably, wherein the controller is configured to recognize input based on the position information of the one or more detection units and the position information of the input non-recognition area.

The present invention also relates to an image forming apparatus comprising, a display unit that includes one or more detection units; a storage unit that stores map information indicating whether the detection unit corresponds to any area in a display area of the display unit; a controller configured to identify one or more available detection units among the one or more detection units, and control the display unit to activate an area of the display area corresponding to the available detection unit, based on the map information; an input unit configured to receive selection of a detection unit to be used among the available detection units; and a printer unit configured to print an image on a sheet, after the input unit receives the selection of a detection unit to be used.

The present invention also relates to a method of communicating the positon of a plurality of detection units in a display area of a display unit, comprising the steps of: storing map information indicating whether any of the detection units corresponds to any area in the display area; determining one or more available detection units among the detection units; and activating an area in the display area corresponding to an available detection unit, based on the map information.

Preferably, activating the area includes displaying a mark on the area.

The method may further comprise controlling the display unit to display information indicating authentication is in progress in a different area from the area.

The method may further comprise receiving selection of a detection unit to be used among the available detection units.

Preferably, the plurality of detection units comprises a first detection unit and a second detection unit at different positions in the display unit.

Preferably, activating the area includes displaying information indicating either of the first detection unit or the second detection unit is an available detection unit.

The method may further comprise when the first detection unit is selected by the user, activating the first detection unit and deactivating the second detection unit.

Preferably, the map information includes position information of the detection units and position information of an input non-recognition area.

Preferably, input is recognized based on the position information of the detection units and the position information of the input non-recognition area.

Hereinafter, the embodiments will be described, as non-limiting examples, with reference to drawings.

A configuration of a multi-functional peripheral (MFP) 1 will be described.

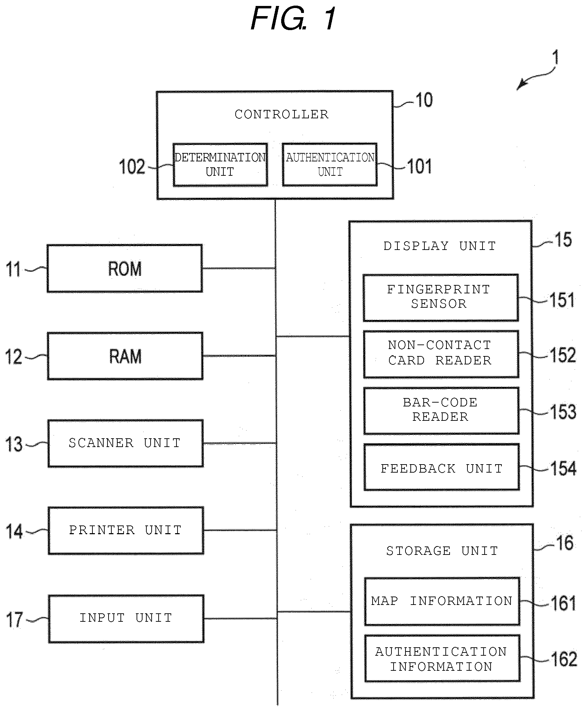

FIG. 1 is a block diagram which is one example of a MFP 1. The MFP 1 is used as one example of a display device, but the display device may be a stationary or portable device other than the MFP 1.

The MFP 1 includes a controller 10, a read only memory (ROM) 11, a random access memory (RAM) 12, a scanner unit 13, a printer unit 14, a display unit 15, a storage unit 16, and an input unit 17. Each unit of the MFP 1 is connected with one another via a system bus.

The controller 10 controls each unit of the MFP 1. The controller 10 includes a central processing unit (CPU). The controller 10 includes an authentication unit 101 to process authentication. The controller 10 includes a determination unit 102 to determine whether the authentication by the authentication unit 101 results in success or failure.

The ROM 11 stores various types of control programs necessary for the MFP 1 to operate.

The RAM 12 is a buffer memory for temporarily storing data generated at the time of execution of the control program.

The scanner unit 13 reads a document to capture the image data of the document.

The printer unit 14 prints the image data on a sheet.

The display unit 15 includes the display area configured with a liquid crystal panel or the like. The display unit 15 includes a fingerprint sensor 151, a non-contact card reader 152, and a bar-code reader 153. The fingerprint sensor 151, the non-contact card reader 152, and the bar-code reader 153 are examples of authentication devices (detection units). The authentication device may be an authentication system that has a display unit 15 requiring contact with the user or no contact with the user.

The fingerprint sensor 151 is an authentication device that requires contact between the user and the display area of the display unit 15. By this contact, the fingerprint sensor 151 detects a fingerprint to acquire information of the fingerprint. The fingerprint sensor 151 is a camera device with a plurality of photodiodes and a lens.

The non-contact card reader 152 is an authentication device that requires no contact between the user and the display area of the display unit 15. The non-contact card reader 152 detects, for example, an integrated circuit (IC) card to acquire the information recorded in the IC card. The non-contact card reader 152 uses an antenna to communicate with the IC card.

The bar-code reader 153 is an authentication device that requires no contact between the user and the display area of the display unit 15. The bar-code reader 153 detects the bar-code attached to a medium to acquire the information recorded in the bar-code. The bar-code reader 153 is a camera device with a plurality of photodiodes and a lens.

The above-described authentication devices are in a position near, or adjacent to, the display area of the display unit 15 in the MFP 1. Each authentication device may be built in the liquid crystal panel using system on glass technology or the like as one example. Alternately, each authentication device may be provided with a separate body from the liquid crystal panel as another example. The authentication device detects a subject via the display area of the display unit 15 to acquire the information from the subject. A plurality of the authentication devices may be respectively provided in different parts of the display unit 15, depending on the type of display unit or operating system (OS).

The authentication device may be a camera device for detecting a vein or a retina, or may be a sign or image recognition device, or a touch panel, but the device is not limited thereto. The display unit 15 has at least one authentication device.

The display unit 15 may also have a feedback unit 154. The feedback unit 154 is, for example, an actuator. The feedback unit 154 vibrates in response to a user's contact in the display area of the display unit 15, for example when the user presses or clicks a key. The display area of the display unit 15 gives a feedback response to the user according to a vibration of the feedback unit 154. Thus, the user can recognize the success or failure of the tactile click by the vibration. The feedback unit 154 may also give tactile feedback to the user in contact with the display area of the display unit 15, and may use feedback devices other than the actuator.

The storage unit 16 is a non-volatile storage medium. The storage unit 16 is, for example, a hard disk drive (HDD). The storage unit 16 stores various types of programs to cause the controller 10 to execute. The storage unit 16 stores map information 161 and authentication information 162.

The map information 161 indicates whether each authentication device is adjacent to any area in the display area of the display unit 15. In other words, the map information 161 includes position information of the part of the display area of the display device 15 adjacent to each authentication device. Also, the map information may include coordinate values related to a position of each authentication device. The map information 161 may be a bitmap or the information such as an extensible markup language (XML), but is not limited thereto.

The authentication information 162 is the information used to authenticate a user of the MFP 1. The authentication information 162 is compared with the information acquired in the authentication device by the authentication unit 101 to authenticate a user.

The input unit 17 is a switch that may be used to specify settings for processing of the MFP 1. The input unit 17 may be a click type switch or a touch panel.

An example of map information 161 will now be described.

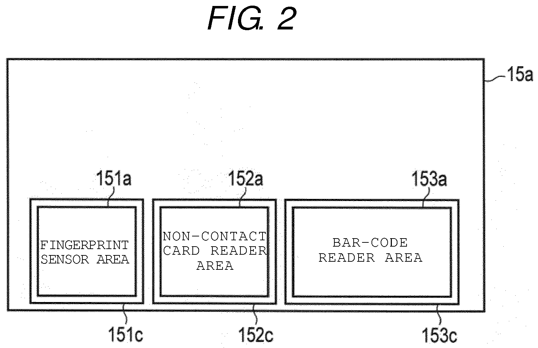

FIG. 2 is a diagram that illustrates the map information 161.

FIG. 2 indicates the position in the display area 15a of the display unit 15 corresponding to each authentication device.

The fingerprint sensor area 151a is the part of the display area 15a corresponding to, and used by, the fingerprint sensor 151. The fingerprint sensor area 151a is the area in which the fingerprint sensor 151 is able to detect the user's fingerprint. The non-contact card reader area 152a is the part of the display area 15a corresponding to, and used by, the non-contact card reader 152. The non-contact card reader area 152a is the area in which the non-contact card reader 152 is able to detect the IC card. The bar-code reader area 153a is the part of the display area 15a corresponding to, and used by, the bar-code reader 153. The bar-code reader area 153a is the area in which the bar-code reader 153 is able to detect the bar-code.

The map information 161 includes the position information of the fingerprint sensor area 151a in the display area 15a. Similarly, the map information 161 includes the position information of the non-contact card reader area 152a in the display area 15a. The map information 161 includes the position information of the bar-code reader area 153a in the display area 15a. Thus, the map information 161 includes information about the location of each sensor area in the display area 15a.

An authentication sequence in the MFP 1 will now be described.

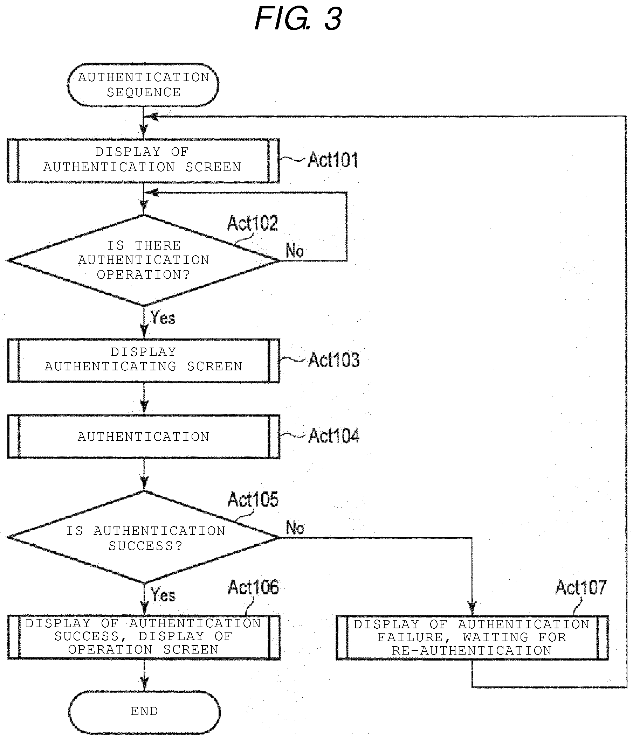

FIG. 3 is a flow chart illustrating the authentication sequence.

The controller 10 controls the display unit 15 to display an authentication screen in the display area 15a (Act 101). The controller 10 controls the display unit 15 to display the authentication screen at the time when user authentication is required using the MFP 1 in Act 101. For example, the authentication screen may be a login waiting screen when the MFP 1 is booted. A display sequence of the authentication screen will be described later.

The controller 10 determines whether the authentication operation is performed in the authentication screen (Act 102) based on detection of a subject by the authentication device and information acquisition from the subject in Act 102.

When the authentication operation is not performed (No in Act 102), the controller 10 waits until the authentication operation is performed. The time period after the authentication screen is displayed in the display area 15a, while the controller 10 waits for the authentication operation, is called an authentication waiting state.

When the authentication operation is performed (Yes in Act 102), the controller 10 controls the display unit 15 to display an authenticating screen in the display area 15a (Act 103). The authenticating screen is the screen indicating that authentication is in progress.

The authentication unit 101 performs authentication processing (Act 104). The control unit 10 checks the information acquired in the authentication device with the authentication information 162 in Act 104.

The determination unit 102 determines whether or not authentication succeeds (Act 105). When the information acquired in the authentication device corresponds to the authentication information 162, the controller 10 determines the authentication succeeded in Act 105. When the information acquired in the authentication device does not correspond to the authentication information 162, the controller 10 determines the authentication failed. The controller 10 completes the authentication processing by determining the success or failure of the authentication.

When the authentication succeeds (Yes in Act 105), the controller 10 controls the display unit 15 to display a message of authentication success in the display area 15a (Act 106). Furthermore, the controller 10 also controls the display unit 15 to display an operation screen in the display area 15a.

When the authentication fails (No in Act 105), the controller 10 controls the display unit 15 to display a message of authentication failure in the display area 15a (Act 107). Furthermore, the controller 10 controls the display unit 15 to again display the authentication screen in the display area 15a, returning to the authentication waiting state of Act 101. When authentication fails, the controller 10 does not cause the display unit 15 to display the operation screen.

A display sequence of the screen for authentication will now be described.

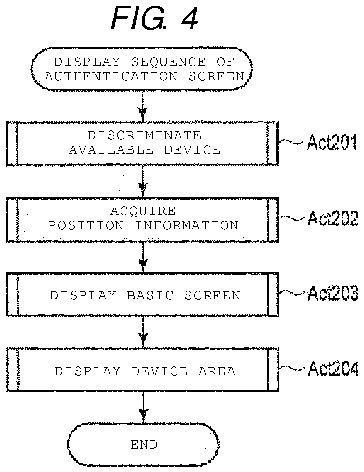

FIG. 4 is the flow chart illustrating the display sequence of the screen for authentication.

The controller 10 determines one or more available authentication devices among the authentication devices (Act 201). The controller 10 determines the available authentication device according to the state of the MFP 1 in Act 201. For example, the state of the MFP 1 is the log-in waiting state when the MFP 1 is booted. When the MFP 1 is in the log-in waiting state, the controller 10 determines the available authentication device at the time of log-in, which is determined in advance, activates the available authentication device, and deactivates other authentication devices.

The controller 10 acquires the map information 161 from the storage unit 16 (Act 202).

The controller 10 controls the display unit 15 to display a basic screen in the display area 15a (Act 203). The basic screen is a screen communicating a message requiring authentication.

The controller 10 controls the display unit 15 to display the message in the area corresponding to the available authentication device in the display area 15a, based on the map information 161 (Act 204). The message may include a mark such as an icon related to the available authentication device.

The user can thus easily recognize what to do to accomplish authentication.

The screen displayed in a display area 15a in the authentication sequence described with reference to FIG. 3 will now be described.

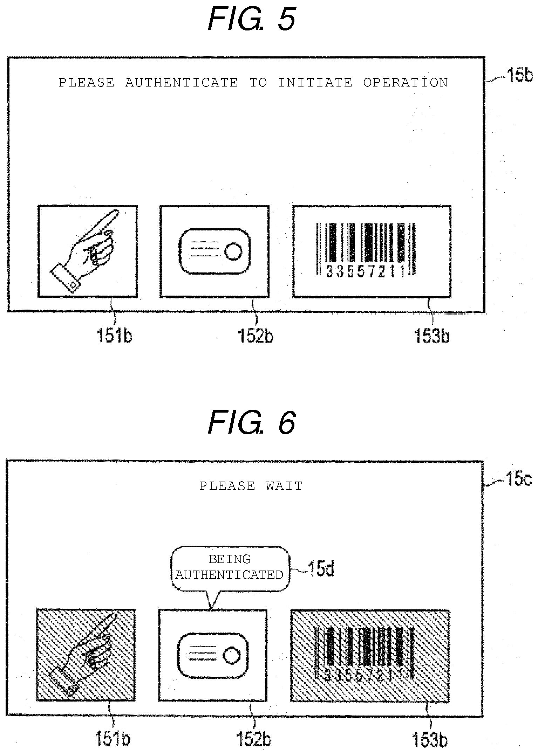

FIG. 5 is a diagram illustrating an example of an authentication screen 15b. Here, the available authentication device is assumed to be the fingerprint sensor 151, the non-contact card reader 152, and the bar-code reader 153. The controller 10 controls the display unit 15 to display the basic screen having the message requiring the authentication operation as the authentication screen 15b in the display area 15a.

The controller 10 controls the display unit 15 to display the fingerprint icon 151b on the area adjacent to the fingerprint sensor 151 on the authentication screen 15b. The controller 10 controls the display unit 15 to display the non-contact card icon 152b on the area adjacent to the non-contact card reader 152 on the authentication screen 15b. The controller 10 controls the display unit 15 to display the bar-code card icon 153b on the area adjacent to the bar-code reader 153 on the authentication screen 15b.

FIG. 6 is a diagram illustrating an example of an authenticating screen 15c. Here, it is assumed that the user performed an authentication operation by touching the IC card on the non-contact card reader 152.

The authenticating screen 15c includes a message 15d indicating authentication is in progress, in addition to the fingerprint icon 151b, the non-contact card icon 152b, and the bar-code card icon 153b.

The controller 10 controls the display unit 15 to display the message 15d in a different area from the area corresponding to the available authentication devices in the display area 15a, based on the map information 161. Referring to FIG. 6, the message 15d is displayed in an area other than the areas of the fingerprint icon 151b, the non-contact card icon 152b, and the bar-code card icon 153b, as defined by the map information 161. For this reason, the message 15d does not overlap with any icon, and the user can easily recognize contents of the message 15d.

The controller 10 may control the display unit 15 to highlight the display in the area of an authentication device in use in any way. For example, the controller 10 may control the display unit 15 to display a background of the area of the authentication device used by the user to perform the authentication operation with white, and to display the background of the area of the unused authentication devices with black. Thus, the user can easily recognize which authentication device was used to perform the authentication operation.

According to the embodiment, the MFP 1 can communicate the position of the detection area and detection timing in the display area. For this reason, the user can easily recognize when and how to perform authentication.

Several modification examples of the embodiment will now be described.

In a first modification example, in connection with Act 102 the controller 10 may receive an input of a selection of an authentication device among the available authentication devices to be used for authentication. The user inputs the selection using the input unit 17. The controller 10 deactivates the unselected authentication devices based on the user's selection using the input unit 17.

According to this example, the user can avoid activating an unintended authentication device. For example, if a non-contact card reader and a retina sensor are available authentication devices, if the user desires to use the non-contact card reader, the retina sensor may also detect the retina of the user standing in front of the MFP 1, resulting in potential confusion from double-detection of an authentication operation. If the user selects the non-contact card reader, the retina sensor is deactivated and cannot detect the retina of the user. For this reason, while using the non-contact card reader, the user can avoid activating the unintended retina sensor.

The second modification example will now be described. The display unit 15 may include two or more authentication devices of the same type in different positions. The same type means that the type of authentication information to be acquired by the authentication device is the same. For example, the display unit 15 may include two or more fingerprint sensors, two or more retina sensors, two or more non-contact card readers, and/or two or more bar code readers.

In this case, the controller 10 identifies any of the available authentication devices that are the same type, according to the area of the information displayed in the display area 15a in above-described Act 201. The controller 10 can then activate or deactivate all the authentication devices of the same time together. The controller 10 can activate or deactivate each of the two or more authentication devices of the same type based on the map information 161. The controller 10 can set authentication devices of the same type as the device having information displayed in the display area 15a to an available state. The controller 10 can also inactivate other devices. Thus, the controller 10 sets each of the two or more authentication device of the same type as an available authentication device or an unusable authentication device. This modification example can be also applied to the MFP 1 provided with two or more authentication devices of different types.

According to this example, the information displayed in the display area 15a does not overlap with the area of the detection unit. Not only can the user easily recognize the contents of the information to be displayed in the display area 15a, but the user can also easily recognize what to touch on any area in the display area 15a.

The third modification example will now be described. A license to use an authentication device mounted in the MFP 1 may be valid or invalid. The controller 10 can identify an authentication device as valid when a license key corresponding to the authentication device is input in this example. The controller 10 can likewise identify an authentication device as invalid were a license key corresponding to the authentication device has not been not input. The controller 10 can use valid authentication devices, and avoid using invalid authentication devices, for authentication processing. The storage unit 16 stores the license information corresponding to the authentication device permitted for use.

The controller 10 determines the available authentication devices from the valid authentication devices in above-described Act 201 by searching for current license information for each authentication device.

The user can activate a desired authenticating device as available by providing license information to validate the desired device from the authentication devices mounted in the MFP 1.

The fourth modification example will now be described. The controller 10 may perform processing so as not to recognize user input using the display unit 15, such as the click of a key in the area corresponding to the active authentication device, during the authentication waiting state and the authenticating state. Here, refer again to FIG. 2. As illustrated in FIG. 2, the controller 10 defines a click non-recognition area 151c in the display area 15a in the authentication waiting state and the authenticating state. In this example, the click non-recognition area 151c includes at least the fingerprint sensor area 151 a. The click non-recognition area 151c may also include any area around, or extending from, the fingerprint sensor area 151a. The click non-recognition area 151c is an example of an input non-recognition area among several types that may be used.

The controller 10 performs processing for a click of a key by the user in the display area 15a in the authentication waiting state and the authenticating state in the following manner. If the click of the key by the user in the display area 15a is detected in the authentication waiting state and the authenticating state, the controller 10 detects the position of the clicked key. The controller 10 determines whether or not the position of the clicked key is in the click non-recognition area 151c. If the position of the clicked key is in the click non-recognition area 151c, the controller 10 performs processing not to recognize the click of the key. In other words, the controller 10 does not perform processing corresponding to the clicked key.

If the position of the clicked key is not in the click non-recognition area 151 c, the controller 10 recognizes the click of the key to perform processing corresponding to the clicked key.

Several examples of a definition of the click non-recognition area 151c will now be described. In the first example, the controller 10 defines the click non-recognition area 151c by using the map information 161 (the position information of the fingerprint sensor area 151a) relating to the fingerprint sensor 151. Thus, the controller 10 can set the click non-recognition area 151c corresponding to the fingerprint sensor area 151a. The controller 10 can also set the click non-recognition area 151c by arithmetically extending the fingerprint sensor area 151 a. In this case, the controller 10 widens the fingerprint sensor area 151a by few centimeters, for example, using a bilinear method.

In the second example, the storage unit 16 may store the position information of the click non-recognition area 151c as part of the map information 161. The click non-recognition area 151c may be the area corresponding to the fingerprint sensor area 151 a, and also the area extending around the fingerprint sensor area 151 a. The controller 10 uses the position information of the click non-recognition area 151c read from the storage unit 16 in the authentication waiting state and the authenticating state.

According to this example, the controller 10 recognizes the fingerprint (authentication operation) in the fingerprint sensor area 151a, but does not recognize the click. Even if the user unintentionally clicks a key in the vicinity of the fingerprint sensor area 151 a during fingerprint authentication, the controller 10 does not recognize the click in the vicinity of the fingerprint sensor area 151a. For this reason, unintended operations associated with the authentication operation are reduced.

The storage unit 16 may store the position information of the recognition area for click as part of the map information 161, instead of the position information of the click non-recognition area 151c. The recognition area for click is the area for recognizing the click of the key by the user in the authentication waiting state and the authenticating state. Continuing with the same example regarding the fingerprint sensor area 151a, the recognition area for click can be defined as the area of the display area 15a outside fingerprint sensor area 151a. In this case, if the position of the clicked key is in the recognition area for click, the controller 10 recognizes the click of the key to perform processing corresponding to the clicked key. If the position of the clicked key is not in the recognition area for click (*i.e*., inside the fingerprint sensor area 151a), the controller 10 does not perform processing corresponding to the clicked key.

Here, the fingerprint sensor 151 is used as the exemplary input non-recognition area, but it is not limited thereto. The controller 10 can similarly control the other authentication devices.

The fifth modification example will now be described. The controller 10 may perform processing not to recognize the click of the key in the area corresponding to a non-contact authentication device during the authentication waiting state and the authenticating state. Here, refer again to FIG. 2. As illustrated in FIG. 2, the controller 10 defines the click non-recognition area 152c in the display area 15a in the authentication waiting state and the authenticating state. The click non-recognition area 152c includes at least the non-contact card reader area 152a. The click non-recognition area 152c may be the area extending around the non-contact card reader 152. Similarly, the controller 10 defines the click non-recognition area 153c in the display area 15a in the authentication waiting state and the authenticating state. The click non-recognition area 153c includes at least the bar-code reader area 153a. The click non-recognition area 153c may be the area extending around the bar-code reader area 153a.

The controller 10 performs processing for the click of the key in the display area 15a in the authentication waiting state and the authenticating state in the following manner. If the click of the key in the display area 15a is detected in the authentication waiting state and the authenticating state, the controller 10 detects the position of the clicked key. The controller 10 determines whether or not the position of the clicked key is in the click non-recognition area 152c. If the position of the clicked key is in the click non-recognition area 152c, the controller 10 performs processing not to recognize the click of the key. In other words, the controller 10 does not perform the processing corresponding to the clicked key.

If the position of the clicked key is not in the click non-recognition area 152c, the controller 10 recognizes the click of the key to perform the processing corresponding to the clicked key.

The controller 10 determines whether or not the position of the clicked key is in the click non-recognition area 153c, similarly as described above.

Several examples of the definition of the click non-recognition area 152c will now be described. In the first example, the controller 10 defines the click non-recognition area 152c by using the map information 161 (the position information of the non-contact card reader area 152a) relating to the non-contact card reader 152. Thus, the controller 10 can set the click non-recognition area 152c corresponding to the non-contact card reader area 152a. The controller 10 can set the click non-recognition area 152c by arithmetically extending the non-contact card reader area 152a. In this case, the controller 10 widens the non-contact card reader area 152a by few centimeters, for example, using a bilinear method.

Similarly, the controller 10 defines the click non-recognition area 153c by using the map information 161 (the position information of the bar-code reader area 155a) relating to the bar-code reader 153.

In the second example, the storage unit 16 may store the position information of the click non-recognition area 152c as the map information 161. The click non-recognition area 152c may be the area corresponding to the non-contact card reader area 152a, and also the area extending around the non-contact card reader area 152a. The controller 10 uses the position information of the click non-recognition area 152c read from the storage unit 16 in the authentication waiting state and the authenticating state.

Similarly, the storage unit 16 may store the position information of the click non-recognition area 153c as the map information 161. The click non-recognition area 153c may be the area corresponding to the bar-code reader area 153a, and also the area extending around the bar-code reader area 153a. The controller 10 uses the position information of the click non-recognition area 153c read from the storage unit 16 in the authentication waiting state and the authenticating state.

According to this example, even if the user unintentionally clicks the non-contact card reader area 152a or the vicinity thereof when touching the IC card in the display area 15a, the controller 10 does not recognize the click. For this reason, unintended operations during authentication are reduced. It is the same even when the user touches the bar-code in the display area 15a.

The storage unit 16 may store position information defining a recognition area for click input around the non-contact card reader 152, instead of position information for the click non-recognition area 152c. The recognition area for click relating to the non-contact card reader 152 is the area in which a click of a key by the user in the authentication waiting state and the authenticating state will be recognized and processed. The recognition area for click relating to the non-contact card reader 152 is the part of the display area 15a outside the non-contact card reader area 152a. In this case, if the position of the clicked key is in the recognition area for click relating to the non-contact card reader 152, the controller 10 recognizes the click of the key to perform processing corresponding to the clicked key. If the position of the clicked key is not in the recognition area for click relating to the non-contact card reader 152, the controller 10 does not perform processing corresponding to the clicked key. Similarly, the storage unit 16 may store the position information of the recognition area for click relating to the bar-code reader 153, instead of the position information of the click non-recognition area 153c.

Here, the non-contact card reader 152 and the bar-code reader 153 are described as the examples, but they are not limited thereto. The controller 10 can similarly control other non-contact authentication devices.

The sixth modification example will now be described. The display unit 15 may stop a feedback response during authenticating processing. The controller 10 controls the operation of the feedback unit 154 to stop operation of the feedback unit 154 during authenticating processing, based on information acquired from the authentication device. In this example, during an authentication operation requiring user contact with the display area 15a, the display unit 15 does not give a feedback response to the user under certain circumstances, for example in the event of non-recognized click or unsuccessful authentication.

The display unit 15 may give feedback responses having different patterns and intensities under some circumstances. For example, the controller 10 may change a pitch of the vibration by the actuator during authenticating processing from the pitch for a normal click in the display area 15a. For example, the display unit 15 may give the feedback response with the different pattern when authentication processing is complete. The feedback response at completion of authentication processing may be the same as the feedback response during authenticating processing, or different from the feedback response during authenticating processing.

According to this example, the user can tactilely recognize whether or not the MFP 1 has completed authentication processing.

While authentication processing by the controller 10 is described in the above embodiments, the controller 10 may acquire information for purposes other than authentication from the subject using the authentication device. The embodiment may be realized using a program to be executed by a computer.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. A display device comprising:
a display unit comprising one or more detection units;
a storage unit that stores map information indicating whether any of the one or more detection units corresponds to any area in a display area of the display unit; and
a controller configured to determine one or more available detection units among the one or more detection units, and control the display unit to activate an area of the display area corresponding to the available detection unit based on the map information.

2. The device according to Claim 1,
wherein the controller is configured to control the display unit to display a mark on the area of the display area corresponding to the available detection unit.

3. The device according to Claim 1 or 2,
wherein the controller is configured to control the display unit to display information indicating authentication is in progress in a different area from the area of the display area corresponding to the available detection unit.

4. The device according to any one of Claims 1 to 3, further comprising:
an input unit configured to receive selection of a detection unit to be used among the available detection units.

5. The device according to any one of Claim 1 to 4,
wherein the one or more detection units comprises a first detection unit and a second detection unit at different positions in the display unit, and
wherein the controller is configured to identify either of the first detection unit or the second detection unit as an available detection unit by displaying an area of information in the display area.

6. The device according to Claim 5, wherein
when the first detection unit is selected by the user, the controller activates the first detection unit and deactivates the second detection unit.

7. The device according to Claim 5 or 6, wherein the first detection unit and the second detection unit are in an available state until the user selects the first detection unit or second detection unit.

8. The device according to any one of Claims 1 to 7,
wherein the map information includes position information of the one or more detection units and positon information of an input non-recognition area,
wherein the controller is configured to recognize input based on the position information of the one or more detection units and the position information of the input non-recognition area.

9. An image forming apparatus comprising a display device according to any one of claims 1 to 8, and
an input unit configured to receive selection of a detection unit to be used among the available detection units; and
a printer unit configured to print an image on a sheet, after the input unit receives the selection of a detection unit to be used.

10. A method of communicating the positon of a plurality of detection units in a display area of a display unit, comprising the steps of:
storing map information indicating whether any of the detection units corresponds to any area in the display area;
determining one or more available detection units among the detection units; and
activating an area in the display area corresponding to an available detection unit, based on the map information.

11. The method according to claim 10, wherein
activating the area includes displaying a mark on the area.

12. The method according to Claim 10 or 11, further comprising controlling the display unit to display information indicating authentication is in progress in a different area from the area.

13. The method according to any one of Claims 10 to 12, further comprising:
receiving selection of a detection unit to be used among the available detection units.

14. The method according to any one of Claims 10 to 13, wherein,
the plurality of detection units comprises a first detection unit and a second detection unit at different positions in the display unit, and
activating the area includes displaying information indicating either of the first detection unit or the second detection unit is an available detection unit.

15. The method according to Claim 14, further comprising,
when the first detection unit is selected by the user, activating the first detection unit and deactivating the second detection unit.
